# EUROPEAN PATENT SPECIFICATION

(11) **EP 4 515 354 B1**
(45) Date of publication and mention of the grant of the patent: **03.06.2026**
(21) Application number: 23721804.5
(22) Date of filing: 14.04.2023
(51) Int. Cl.: G06F 1/16, G06F 1/26

(54) **DEVICE CHASSIS SEPARATION DETECTION**
VORRICHTUNGSGEHÄUSETRENNUNGSERKENNUNG
DÉTECTION DE SÉPARATION DE CHÂSSIS DE DISPOSITIF

(30) Priority: 29.04.2022 NL 2031737
(43) Date of publication of application: 05.03.2025
(73) Proprietor: Microsoft Technology Licensing, LLC, Redmond, WA 98052-6399 (US)
(72) Inventor: SUN, Ji, Redmond, WA 98052-6399 (US); LAO, Lester, Hing Kwok, Redmond, WA 98052-6399 (US); ASFARI, Leila, Redmond, WA 98052-6399 (US)
(74) Representative: Murgitroyd & Company
(86) International application number: PCT/US2023/018621
(87) International publication number: WO 2023/211700

(56) References cited:
- US-A1- 2013 242 505
- US-A1- 2014 237 271

## Description

### FIELD

The specification is directed to devices and methods for detection when a chassis is separated from a computing device.

### BACKGROUND

Electronic devices that include batteries can require inspection, repair or maintenance that necessitates disassembling the device. Exposing internal components while the device's battery provides power to the device can create risks for damage.

Reference is made to the documents US2014/237271A1 and US2013/242505A1 which have been cited as exemplary of the state of the art.

### SUMMARY

It will be appreciated that the scope of the invention is in accordance with the appended clams.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Examples are disclosed that relate to computing devices and methods for detecting when a chassis is separated from a computing device. In one example, a computing device comprises a chassis comprising a plurality of conductive contacts and a user interactive surface removably secured to the chassis. A circuit board is electrically coupled to a battery and comprises a plurality of conductive pads. Each conductive pad of the circuit board is operatively configured to contact a corresponding conductive contact of the chassis when the chassis is removably secured to the user interactive surface. The computing device further comprises a memory storing instructions executable by a processor to detect when the chassis is separated from the user interactive surface, wherein the instructions are executable to, when the battery is in a powered-on state: determine that none of the conductive contacts are contacting a conductive pad of the plurality of conductive pads; and on condition that none of the conductive contacts are contacting a conductive pad, either disconnect the battery from providing power to the computing device or transition the battery to a powered-off state.

Another example provides a method for determining when a chassis of a computing device is separated from a user interactive surface of the computing device, the chassis being removably securable to the user interactive surface and comprising a plurality of conductive contacts, the computing device further comprising a battery and a circuit board electrically coupled to the battery and comprising a plurality of conductive pads. The method comprises, when the battery is in a powered-on state, determining that none of the conductive contacts are contacting a conductive pad of the plurality of conductive pads of the circuit board. On condition that none of the conductive contacts are contacting a conductive pad of the plurality of conductive pads, the method includes either disconnecting the battery from providing power to the computing device or transitioning the battery to a powered-off state.

Another example provides a laptop computing device that comprises a chassis comprising a plurality of conductive contacts and a user interactive surface removably secured to the chassis. A display substrate is rotatably coupled to the chassis. A circuit board is electrically coupled to a battery and comprises a plurality of conductive pads. Each conductive pad of the circuit board is operatively configured to contact a corresponding conductive contact of the chassis when the chassis is removably secured to the user interactive surface. The laptop computing device further comprises a memory storing instructions executable by a processor to detect when the chassis is separated from the user interactive surface, wherein the instructions are executable to, when the battery is in a powered-on state: determine that none of the conductive contacts are contacting a conductive pad of the plurality of conductive pads; and on condition that none of the conductive contacts are contacting a conductive pad, either disconnect the battery from providing power to the laptop computing device or transition the battery to a powered-off state.

### BRIEF DESCRIPTION OF THE DRAWINGS

FIG. 1 shows an example of a computing device in the form of a laptop computing device according to examples of the present disclosure.
FIG. 2 shows the chassis, circuit board and battery of the laptop computing device of FIG. 1.
FIG. 3 shows the chassis of FIG. 2 with the circuit board and battery depicted above the chassis.
FIG. 4 shows a bottom view of the circuit board of FIG. 2 including two conductive pads according to examples of the present disclosure.
FIG. 5 shows one example of a conductive contact contacting a conductive pad of the circuit board according to examples of the present disclosure.
FIG. 6 shows another example of a chassis that may be utilized with the laptop computing device of FIG. 1 according to examples of the present disclosure.
FIG. 7 shows another example of a circuit board that may be utilized with chassis of FIG. 6 and the laptop computing device of FIG. 1 according to examples of the present disclosure.
FIGS. 8A and 8B show a block diagram of an example method for determining when the chassis is separated from the user interactive surface according to examples of the present disclosure.
FIG. 9 shows a block diagram of an example computing system according to examples of the present disclosure.

### DETAILED DESCRIPTION

Many computing devices, such as laptop computing devices, mobile display devices, peripheral devices, smartphones, and other devices, utilize one or more batteries for power. When these devices need inspection, repair or maintenance, often the device is at least partially disassembled to access internal components. In these situations, exposing such internal components while the battery provides power to the device can create risks short circuits and damage to components.

In some examples, a mechanical switch is utilized to detect when a computing device case is opened. However, such configurations present several challenges and drawbacks. For example, mechanical switches can be easily damaged, and can be unintentionally triggered when a device is dropped, pinched, or otherwise exposed to mechanical stresses. Additionally, different switch designs require different magnitudes of force to actuate, and designing corresponding device substrates and components to reliably and consistently interact with a switch in a defined manner can be challenging and costly. Further, mechanical switches can occupy significant packaging space and add undesirable weight and cost to a device.

In other examples, the battery of a device can be disconnected when a wired connection to a circuit board is physically removed by a technician or user. However, these configurations require the reservation of two pins on the circuit board for each connection. This constraint can quickly increase the cost and complexity of the circuit board. Further, these examples require a technician or user to manually disengage one or more circuit board connections. Where the technician or user forgets to perform such disengagement(s), the battery remains in a powered-on state while the device is disassembled, and damage to exposed, sensitive components can result.

Accordingly, and as described in more detail below, examples are disclosed that relate to configurations for detecting when a chassis is separated from a computing device that address one or more drawbacks of previous designs. As described in more detail below, the present disclosure provides inexpensive, reliable, and mechanically durable configurations for detecting when the chassis is separated from the device and correspondingly controlling the battery to cease power distribution.

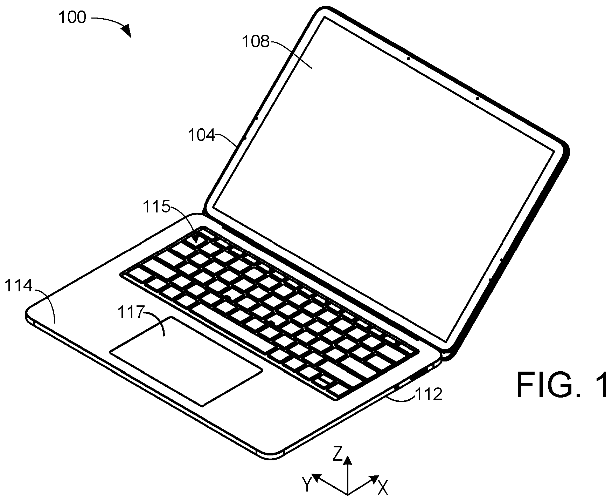

FIG. 1 shows one example of a laptop computing device 100 that incorporates configurations of the present disclosure. As described in more detail below, the computing device 100 includes a display substrate 104 comprising a display 108. The display substrate 104 is rotatably coupled to a chassis 112. In some examples, (e.g., in a two-in-one computing device), the display substrate 104 and the chassis 112 may be detachable.

The chassis 112 is removably secured to a user interactive surface 114. In different examples, the chassis 112 can be removably secured to the user interactive surface 114 via one or more magnets, one or more fasteners, combinations of the foregoing, and in any other suitable manner. Additionally, in different examples the chassis 112 can be directly secured to the user interactive surface 114, or the chassis can be indirectly secured to the user interactive surface via one or more intermediate surfaces and/or components. In the present example, the user interactive surface 114 includes a keyboard 115 and a trackpad 117. In other examples, a user interactive surface can include additional, fewer, and/or different user interactive components and other features.

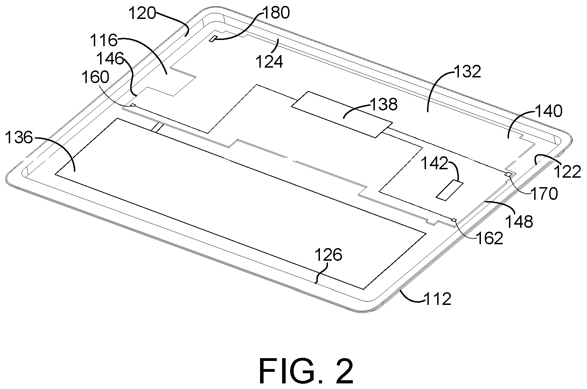

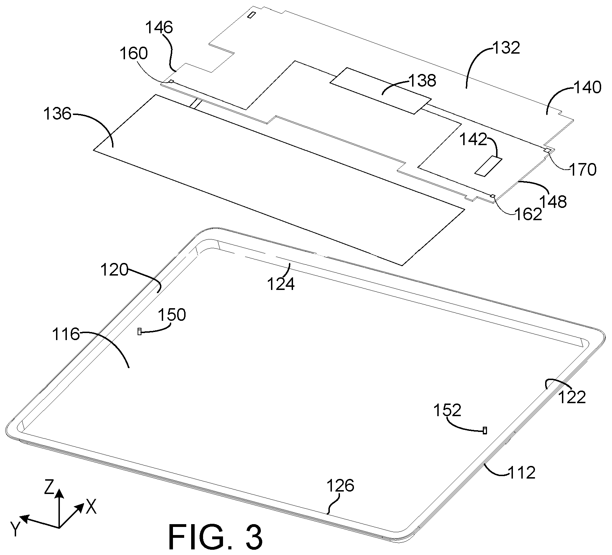

With reference now to FIGS. 2 and 3 showing chassis 112, in this example the chassis comprises an interior base surface 116 surrounded by four chassis walls 120, 122, 124, and 126. As shown in FIG. 2, when the laptop computing device 100 is fully assembled as shown in FIG. 1, a circuit board 132 (e.g., motherboard) and battery 136 are located within the chassis 112. The circuit board 132 is electrically coupled to the battery 136. The circuit board 132 includes a processor 138 on an upper surface 140 of the circuit board along with other components (not shown).

Additionally, the circuit board 132 includes a plurality of conductive pads 160, 162 on a lower surface opposite to the upper surface 140. As described in more detail below, the conductive pads 160, 162 are configured to contact corresponding conductive contacts 150, 152 on the chassis 112 when the chassis is removably secured to the user interactive surface 114. Correspondingly, when the chassis 112 is separated from the user interactive surface 114, and with reference now to FIG. 3, the circuit board 132 and battery 136 are similarly removed from their location within the chassis 112, and the conductive contacts 150, 152 on the interior base surface 116 of the chassis are no longer contacting the corresponding conductive pads 160, 162 on the circuit board.

In some examples and with reference also to FIG. 1, the upper surface 140 of the circuit board 132 can be coupled to an interior surface of the user interactive surface 114. In this manner, when the chassis 112 is separated from the user interactive surface 114, the conductive contacts 150, 152 on the chassis are removed from contacting the conductive pads 160, 162 on the circuit board 132. In other examples, the circuit board 132 can be coupled to another surface or component that is coupled to the user interactive surface 114, such that the conductive pads 160, 162 on the circuit board 132 are removed from contacting the conductive contacts 150, 152 on the chassis 112 when the chassis is separated from the user interactive surface.

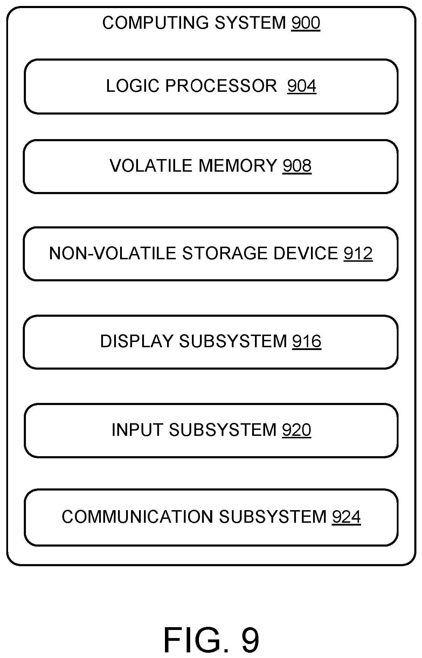

The computing device 100 further comprises memory 142 storing instructions executable by the processor 138 to control operation of the battery 136. More particularly and as described in various use case examples below, the instructions are executable by the processor 138 to determine whether one or more of the conductive contacts are contacting corresponding conductive pads on the chassis 112, and to control operation of the battery 136 accordingly. Additional aspects of the laptop computing device 100 are described in more detail below with reference to FIG. 9.

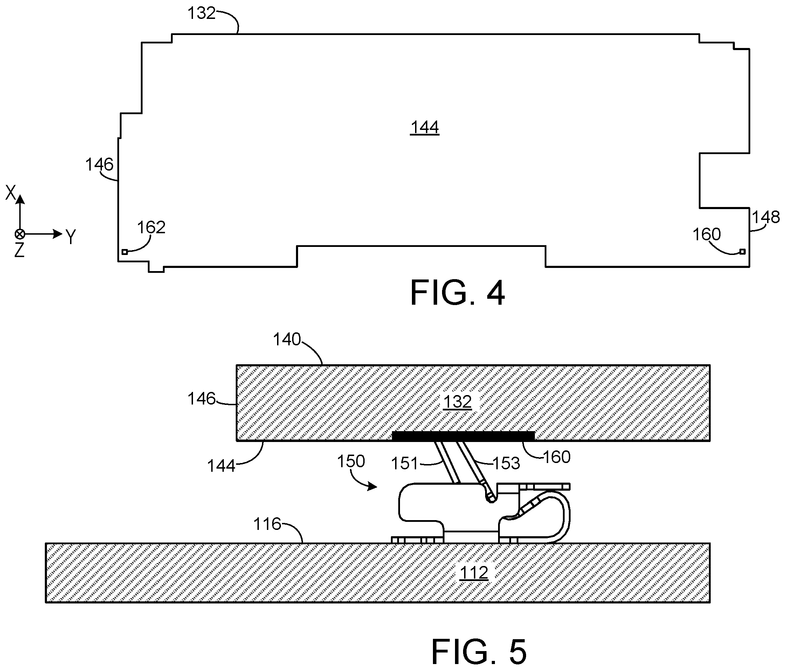

In one example and as shown in FIG. 3, the chassis 112 includes two conductive contacts 150, 152 extending upwardly from the interior base surface 116 of the chassis. With reference now to FIG. 4, in this example the circuit board 132 includes two corresponding conductive pads 160, 162 on its lower surface 144 opposite to its upper surface 140. In one potential advantage of the present disclosure, the locations of the conductive pads 160, 162 on circuit board 132 and the locations of the conductive contacts 150, 152 on the interior base surface 116 of chassis 112 are coordinated to cause each of the conductive contacts to contact a corresponding conductive pad when the chassis 112 is removably secured to the user interactive surface 114 as shown in FIG. 1.

FIG. 5 shows one example of a conductive contact 150 that can be utilized in configurations of the present disclosure. FIG. 5 also illustrates portions of the circuit board 132 and chassis 112 and shows the conductive contact 150 contacting a corresponding conductive pad 160 of the circuit board 132 when the chassis is secured to the user interactive surface 114. In this example, conductive contact 150 is mounted to the interior base surface 116 of the chassis 112 and comprises two resilient conductive contacting arms 151, 153 that are contacting the corresponding conductive pad 160 of the circuit board 132. It will be appreciated that the other conductive contact 152 on the opposing side of the chassis 112 can have the same configuration as conductive contact 150 and similarly is contacting its corresponding conductive pad 162 of the circuit board 132.

In other examples, a variety of other configurations of conductive contacts may be utilized with the present disclosure. For example, a conductive contact similar to conductive contact 150 that utilizes a single conductive contacting arm may be implemented. Other examples include, but are not limited to, various types and configurations of spring-loaded pins. Advantageously, conductive contacts such as conductive contact 150, spring-loaded pins, and the like, embody mechanically simple and reliable designs, occupy small amounts of device packaging space, and are relatively inexpensive. Accordingly, and in another advantage of configurations of the present disclosure, utilizing conductive contacts to detect when a chassis is separated from a user interactive surface as described herein provides mechanically robust and cost-effective solutions that require little device space and also facilitate compact device designs.

With reference also to FIG. 2, each conductive pad 160, 162 is electrically coupled to the processor 138 on circuit board 132. In this manner, and in one potential advantage of the present disclosure, the processor 138 can execute logic to determine whether one or both of the conductive contacts 150, 152 are contacting corresponding conductive pads 160, 162, and use these determinations to control the battery 136 accordingly. Additionally, as described in more detail below and in another potential advantage of the present disclosure, by utilizing two or more conductive contacts and corresponding conductive pads, configurations of the present disclosure provide redundancy for determining whether the chassis 112 is separated from the user interactive surface 114 of the computing device 100. In this manner, unintended battery disconnects resulting from drops, device compressions and/or other stresses can be substantially prevented.

As described further below and in some examples, determining that at least one of the conductive contacts is contacting a conductive pad comprises determining that at least one conductive contact is connected to ground. In these examples the conductive contact provides a ground signal via contact with the conductive pad. In these examples, utilizing a ground signal provides an electrically simple configuration for determining that one or more conductive contacts are contacting a conductive pad. In other examples, the plurality of conductive contacts are energized, such as by electrically coupling the contacts to the battery 136. In these examples, determining that one or more of the contacts is contacting a conductive pad comprises detecting a voltage level change at one or more of the contacts. In some examples, current (e.g., a power signal) is received from one or more of the contacts via a conductive pad. In these examples, detecting a power signal can provide a more electrically robust configuration for determining that a conductive contact is contacting a conductive pad. In other examples, a voltage level change can be detected via a general purpose input/output signal (GPIO) received via one or more of the conductive contacts.

In a condition where all conductive contacts are contacting their corresponding conductive pads and the battery is in a powered-on state, the logic operates to maintain the battery in the powered-on state as long as at least one conductive contact is contacting a conductive pad. Advantageously, by utilizing multiple pairs of conductive contacts/pads and this logic, configurations of the present disclosure provide measures of redundancy to protect against inadvertent and unintended battery shutdowns. For example and referring again to the example laptop computing device 100, once the computing device is fully assembled and chassis 112 is removably secured to the user interactive surface 114, as long as at least one pair of the two pairs of conductive contacts 150, 152 and conductive pad 160, 162 are in contact, the battery is maintained in the powered-on state. Advantageously, even if one conductive contact is displaced from contacting its corresponding conductive pad, such as if the device is dropped or jarred from impact with an external surface, the battery 136 is maintained in the powered-on state.

In other examples, the computing device 100 may need to be disassembled for repair or investigation of an operational issue. As noted above, whenever the chassis 112 is removed from the user interactive surface 114, it is desirable to reliably and automatically power down the battery 136 to a powered-off state and/or disconnect the battery from providing power to the computing device. At the same time and as noted above, it is also desirable to avoid unintended and inadvertent battery disconnections and shutdowns, such as when the device is dropped or jarred from contacting an external surface. Accordingly, and in another potential advantage of the present disclosure, when the battery 136 is in the powered-on state, the battery will be either disconnected from providing power to the computing device or transitioned to a powered-off state only when the logic detects that all conductive contacts are not in contact with a corresponding conductive pad.

More particularly and in some examples, when the battery is in the powered-on state and the chassis 112 is then separated from the user interactive surface 114, the logic determines that none of the conductive contacts 150, 152 are contacting a corresponding conductive pad 160, 162 on the circuit board 132. Next, and on condition that none of the conductive contacts are contacting a conductive pad, the logic either disconnects the battery from providing power to the computing device or transitions the battery to a powered-off state. Advantageously and as noted above, by requiring the determination that none of the conductive contacts are in contact with a corresponding conductive pad, configurations of the present disclosure avoid unintended battery disconnections and shutdowns.

In some examples, the logic requires that none of the conductive contacts 150, 152 are contacting a corresponding conductive pad 160, 162 on the circuit board 132 for at least a threshold period of time, such as 5 milliseconds (ms), 10 ms, 15 ms, or other suitable period of time, before either disconnecting the battery or transitioning the battery to a powered-off state. In these examples, and in another potential advantage of the present disclosure, by requiring at least a threshold period of time of no contact between the conductive contacts 150, 152 and a corresponding conductive pad 160, 162 as a condition of either disconnecting the battery or transitioning the battery to a powered-off state, configurations of the present disclosure prevent unintended battery disconnections or power-off transitions that otherwise may occur upon brief interruptions of contact between the conductive contacts and corresponding conductive pads, such as when the device is dropped and sustains a sharp impact.

In a similar manner and in other examples, when the battery 136 is disconnected from providing power to the computing device and/or in a powered-off state, instructions stored in memory 142 are executable to require detection of all conductive contacts contacting corresponding conductive pads before activating and/or connecting the battery to the circuit board (e.g., transitioning the battery to a powered-on state). In these examples it will be appreciated that when the battery 136 is in a powered-off state and/or is disconnected from providing power to the computing device, standby power is provided to processor 138, such as from a standby power circuit in battery 136, that enables the processor to execute logic to detect that conductive contact(s) 150, 152 are contacting corresponding conductive pads 160, 162 and correspondingly activate and/or connect the battery to the circuit board (transition the battery to a powered-on state). In one example, during manufacturing or repair of the computing device 100, the chassis 112 may be separated from the user interactive surface 114 with the battery 136 in a powered-off state. While the battery is in the powered-off state, the chassis 112 is then secured to the user interactive surface 114, which causes both conductive contacts 150, 152 to contact their corresponding conductive pad 160, 162 on the circuit board 132.

Logic then determines that both conductive contacts 150, 152 are contacting a corresponding conductive pad 160, 162 on the circuit board 132. On condition that both conductive contacts 150, 152 are contacting their corresponding conductive pad 160, 162, the logic then operates to transition the battery to the powered-on state. In this manner, and in another potential advantage of the present disclosure, while the chassis 112 is separated from the user interactive surface 114, the battery 136 remains safely powered-off until the chassis is again secured to the user interactive surface and both conductive contacts 150, 152 contact their corresponding conductive pad 160, 162 on the circuit board 132.

Additionally, and as described further below, any suitable number of conductive contacts and corresponding conductive pads can be utilized in different configurations of the present disclosure.

Returning to the example of FIGS. 2-5, in some examples the conductive contacts 150, 152 and conductive pads 160, 162 can be positioned on the chassis 112 and circuit board 132, respectively, in locations that reduce or substantially eliminate inadvertent or unintended losses of contact between a conductive contact and corresponding conductive pad. For example, and with reference to the laptop computing device 100 of FIGS. 1-3, it will be appreciated that forces applied or encountered in the central areas of the device can cause deflections in portions of the interior base surface 116 and user interactive surface 114 that are similarly centrally located. Correspondingly, it will also be appreciated that areas of the interior base surface 116 and user interactive surface 114 that are closer to the chassis walls 120, 122, 124, and 126 will experience significantly less deformation than the more centrally located areas of these surfaces as a result of such external forces.

Accordingly, and in another potential advantage of the present disclosure, at least one conductive contact is located adj acent to a first side of the chassis 112, and at least one other conductive contact is located adjacent to a second side opposite to the first side of the chassis. In a similar manner, at least one conductive pad is located adjacent to a first side of the circuit board 132, and at least one other conductive pad is located adj acent to a second side opposite to the first side of the circuit board. For purposes of the present disclosure, the term "adjacent" means situated near, close to, or adjoining.

In one example, FIG. 3 shows the chassis 112 with the circuit board 132 and battery 136 depicted above the chassis. In this example, a first conductive contact 150 is positioned adjacent to a first chassis wall 120 and the second conductive contact 152 is positioned adjacent to the opposing second chassis wall 122. Correspondingly, a first conductive pad 160 is positioned adjacent to a first side 146 of the circuit board 132 and the second conductive pad 162 is positioned adjacent to the opposing second aide 148 of the circuit board. Advantageously, by positioning each of the conductive contacts 150, 152 at locations on the interior base surface 116 that are adjacent to sides of the chassis 112, movements of the conductive contacts in the z-axis direction are minimized. Similarly, by positioning each of the conductive pads 160, 162 at locations on the circuit board 132 that are adjacent to sides of the circuit board, movements of the conductive pads in the z-axis direction are minimized. In this manner, when the computing device 100 encounters stresses or sharp forces from accidental drops, device compressions and/or other external forces, the conductive contacts 150, 152 are more likely to remain contacting their corresponding conductive pads 160, 162.

In some examples, the computing device 100 comprises a bypass feature that enables the logic described above to be bypassed, and the battery 136 to be powered on when none of the conductive contacts are contacting a conductive pad of the circuit board 132. As described further below, in some examples this feature enables testing of the device when the chassis 112 and user interactive surface 114 are separated.

In one example and with reference to FIG. 2, the circuit board 132 includes a bypass feature in the form of a bypass pin 170. When the bypass pin 170 is shorted (to a high signal or ground), the logic described above is bypassed and the battery 136 is powered on regardless of whether any or no conductive contacts are contacting a conductive pad. Accordingly, and in another potential advantage of the present disclosure, the bypass feature enables the selective bypassing of the logic described above to allow a technician or user to control the battery to continue providing power for particular use cases, such as repair activities, while the chassis and user interactive surface are separated. In other examples, a bypass pad (not shown) can be provided on a boarder area of the circuit board 132. By applying a conductive clip to the bypass pad, a technician or user can similarly bypass the logic and cause the battery to be powered on while the chassis and user interactive surface are separated.

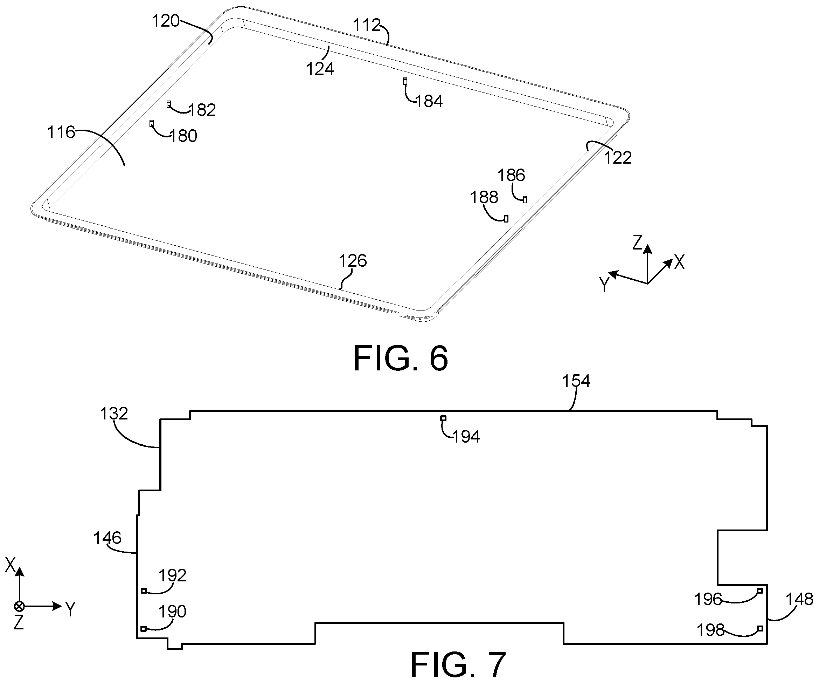

As noted above, while one example of the present disclosure comprises two conductive contacts and two corresponding conductive pads, in other examples any suitable plurality of conductive contacts and corresponding conductive pads can be utilized in configurations of the present disclosure. Examples can include 3, 4, 5, 6, or higher number of conductive contacts and corresponding conductive pads. With reference now to FIGS. 6 and 7, in one example the laptop computing device 100 can utilize five conductive contacts 180, 182, 184, 186, and 188 on chassis 112, and five corresponding conductive pads 190, 192, 194, 196, and 198 on circuit board 132. In this example, conductive contacts 180, 182 are positioned adjacent to the first chassis wall 120 and conductive contacts 186, 188 are positioned adjacent to the opposing second chassis wall 122 of chassis 112. A fifth conductive contact 184 is positioned adjacent to the chassis wall 124 that extends between the first chassis wall 120 and the second chassis wall 122.

Correspondingly, conductive pads 196 and 198 are positioned adjacent to second side 148 of the circuit board 132 such that conductive contacts 180, 182 contact these conductive pads 196, 198 when the chassis 112 is secured to the user interactive surface 114. Similarly, conductive pads 190 and 192 are positioned adjacent to first side 146 of the circuit board 132 such that conductive contacts 186, 188 contact these conductive pads 190, 192 when the chassis 112 is secured to the user interactive surface 114. Also, conductive pad 194 is positioned adjacent to the side 154 extending between the first side 146 and the second side 148 of the circuit board 132, such that conductive contact 184 contacts this conductive pad 194 when the chassis 112 is secured to the user interactive surface 114.

Advantageously, by positioning each of the conductive contacts 180, 182, 184, 186, and 188 at locations on the interior base surface 116 that are adjacent to sides of the chassis 112, movements of the conductive contacts in the z-axis direction are minimized. Similarly, by positioning each of the conductive pads 190, 192, 194, 196, and 198 at locations on the circuit board 132 that are adjacent to sides of the circuit board, movements of the conductive pads in the z-axis direction are minimized. In this manner, when the computing device 100 encounters stresses or sharp forces from accidental drops, device compressions and/or other external forces, the conductive contacts 180, 182, 184, 186, and 188 are more likely to remain contacting their corresponding conductive pads 190, 192, 194, 196, and 198.

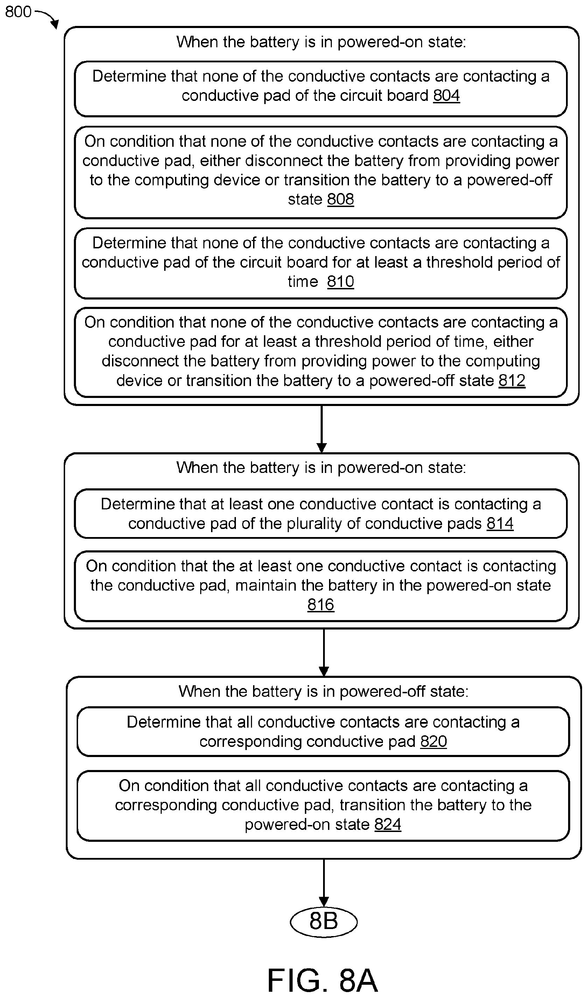

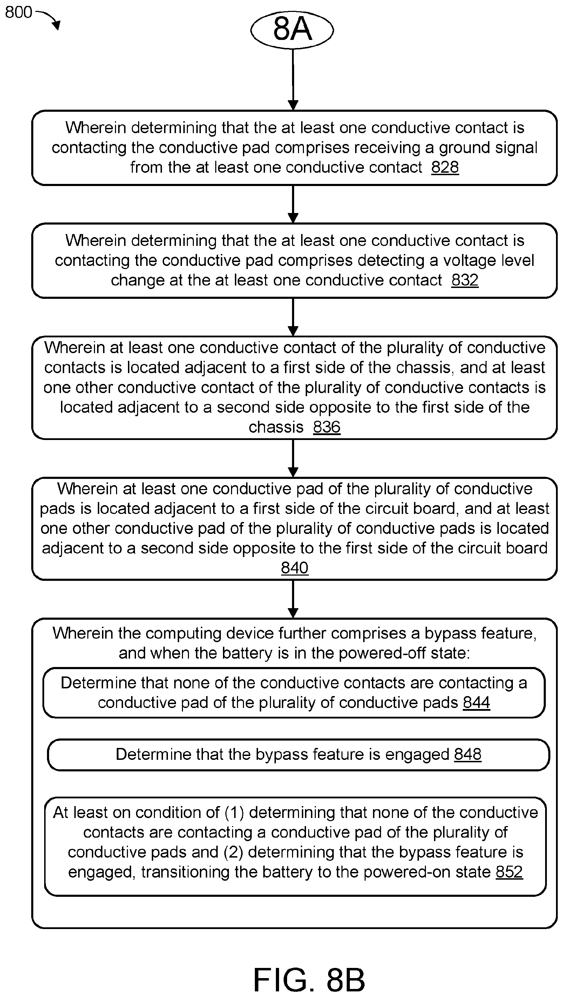

FIGS. 8A and 8B illustrate a method for determining when a chassis of a computing device is separated from a user interactive surface of the computing device, the chassis being removably securable to the user interactive surface and comprising a plurality of conductive contacts, the computing device further comprising a battery and a circuit board electrically coupled to the battery and comprising a plurality of conductive pads. The following description of method 800 is provided with reference to the components described herein and shown in FIGS. 1-7 and 9. For example, the method 800 may be implemented at the laptop computing device 100 of FIG. 1.

It will be appreciated that the following description of method 800 is provided by way of example and is not meant to be limiting. Therefore, it is to be understood that method 800 may include additional and/or alternative steps relative to those illustrated in FIG. 8. Further, it is to be understood that the steps of method 800 may be performed in any suitable order. Further still, it is to be understood that one or more steps may be omitted from method 800 without departing from the scope of this disclosure. It will also be appreciated that method 800 also may be performed in other contexts using other suitable components.

At 804, the method 800 includes, when the battery is in a powered-on state, determining that none of the conductive contacts are contacting a conductive pad of the circuit board, and at 808, on condition that none of the conductive contacts are contacting a conductive pad of the plurality of conductive pads, either disconnecting the battery from providing power to the computing device or transitioning the battery to a powered-off state. At 810 and in some examples, the method 800 includes determining that none of the conductive contacts are contacting a conductive pad of the plurality of conductive pads of the circuit board for at least a threshold period of time, and at 812, on condition that none of the conductive contacts are contacting a conductive pad for at least the threshold period of time, either disconnecting the battery from providing power to the computing device or transitioning the battery to a powered-off state. At 814 the method 800 includes, when the battery is in a powered-on state, determining that at least one conductive contact is contacting a conductive pad of the plurality of conductive pads, and at 816, on condition that at least one conductive contact is contacting the conductive pad, maintaining the battery in the powered-on state.

At 820 the method 800 includes, when the battery is in a powered-off state, determining that all conductive contacts of the plurality of conductive contacts are contacting a corresponding conductive pad of the plurality of conductive pads, and at 824, on condition that all conductive contacts are contacting the corresponding conductive pad, transitioning the battery to the powered-on state. With reference now to FIG. 8B, at 828 the method 800 includes, wherein determining that at least one conductive contact is contacting the conductive pad comprises receiving a ground signal from the at least one conductive contact. At 832 the method 800 includes, wherein determining that the at least one conductive contact is contacting the conductive pad comprises detecting a voltage level change at the at least one conductive contact.

At 836 the method 800 includes, wherein at least one conductive contact of the plurality of conductive contacts is located adjacent to a first side of the chassis, and at least one other conductive contact of the plurality of conductive contacts is located adjacent to a second side opposite to the first side of the chassis. At 840 the method 800 includes, wherein at least one conductive pad of the plurality of conductive pads is located adjacent to a first side of the circuit board, and at least one other conductive pad of the plurality of conductive pads is located adjacent to a second side opposite to the first side of the circuit board At 844 the method 800 includes, wherein the computing device further comprises a bypass feature, and when the battery is in the powered-off state, determining that none of the conductive contacts are contacting a conductive pad of the plurality of conductive pads, and at 848 determining that the bypass feature is engaged. At 852 the method 800 includes, at least on condition of (1) determining that none of the conductive contacts are contacting a conductive pad of the plurality of conductive pads and (2) determining that the bypass feature is engaged, transitioning the battery to the powered-on state.

In some embodiments, the methods and processes described herein may be tied to a computing system of one or more computing devices. In particular, such methods and processes may be implemented as a computer-application program or service, an application-programming interface (API), a library, and/or other computer-program product.

FIG. 9 schematically shows a non-limiting embodiment of a computing system 900 that can enact one or more of the methods and processes described above. Computing system 900 is shown in simplified form. Computing system 900 may take the form of one or more other personal computers, server computers, tablet computers, home-entertainment computers, network computing devices, gaming devices, mobile computing devices, mobile communication devices (e.g., smart phone), computing peripheral devices, and/or other computing devices. In the above examples, the laptop computing device 100 may comprise computing system 900 or one or more aspects of computing system 900.

Computing system 900 includes a logic processor 904, volatile memory 908, and a non-volatile storage device 912. Computing system 900 may optionally include a display subsystem 916, input subsystem 920, communication subsystem 924, and/or other components not shown in FIG. 9.

Logic processor 904 includes one or more physical devices configured to execute instructions. For example, the logic processor may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic processor 904 may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 904 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 912 includes one or more physical devices configured to hold instructions executable by the logic processors to implement the methods and processes described herein. When such methods and processes are implemented, the state of non-volatile storage device 912 may be transformed-e.g., to hold different data.

Non-volatile storage device 912 may include physical devices that are removable and/or built-in. Non-volatile storage device 912 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 912 may include nonvolatile, dynamic, static, read/write, read-only, sequential-access, location-addressable, file-addressable, and/or content-addressable devices. It will be appreciated that non-volatile storage device 912 is configured to hold instructions even when power is cut to the non-volatile storage device 912.

Volatile memory 908 may include physical devices that include random access memory. Volatile memory 908 is typically utilized by logic processor 904 to temporarily store information during processing of software instructions. It will be appreciated that volatile memory 908 typically does not continue to store instructions when power is cut to the volatile memory 908.

Aspects of logic processor 904, volatile memory 908, and non-volatile storage device 912 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), microcontroller units (MCUs), and complex programmable logic devices (CPLDs), for example.

When included, display subsystem 916 may be used to present a visual representation of data held by non-volatile storage device 912. As the herein described methods and processes change the data held by the non-volatile storage device, and thus transform the state of the non-volatile storage device, the state of display subsystem 916 may likewise be transformed to visually represent changes in the underlying data. Display subsystem 916 may include one or more display devices utilizing virtually any type of technology. Such display devices may be combined with logic processor 904, volatile memory 908, and/or non-volatile storage device 912 in a shared enclosure, or such display devices may be peripheral display devices.

When included, input subsystem 920 may comprise or interface with one or more user-input devices such as a stylus, touchpad, keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 924 may be configured to communicatively couple various computing devices described herein with each other, and with other devices. Communication subsystem 924 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 900 to send and/or receive messages to and/or from other devices via a network such as the Internet.

The following paragraphs provide additional support for the claims of the subject application. One aspect provides a computing device, comprising: a chassis comprising a plurality of conductive contacts; a user interactive surface removably secured to the chassis; a battery; a circuit board electrically coupled to the battery and comprising a plurality of conductive pads; and a memory storing instructions executable by a processor to detect when the chassis is separated from the user interactive surface, wherein each conductive pad of the plurality of conductive pads of the circuit board is operatively configured to contact a corresponding conductive contact of the plurality of conductive contacts of the chassis when the chassis is removably secured to the user interactive surface; wherein the instructions are executable to: when the battery is in a powered-on state: determine that none of the conductive contacts are contacting a conductive pad of the plurality of conductive pads; and on condition that none of the conductive contacts are contacting a conductive pad of the plurality of conductive pads, either disconnect the battery from providing power to the computing device or transition the battery to a powered-off state. The computing device may additionally or alternatively include, wherein the instructions are executable to, when the battery is in the powered-on state: determine that at least one conductive contact of the plurality of conductive contacts is contacting a conductive pad of the plurality of conductive pads; and on condition that the at least one conductive contact is contacting the conductive pad, maintain the battery in the powered-on state. The computing device may additionally or alternatively include, wherein the instructions are executable to, when the battery is in the powered-off state: determine that all conductive contacts of the plurality of conductive contacts are contacting a corresponding conductive pad of the plurality of conductive pads; and on condition that all conductive contacts are contacting the corresponding conductive pad, transition the battery to the powered-on state. The computing device may additionally or alternatively include, wherein determining that at least one conductive contact of the plurality of conductive contacts is contacting a conductive pad comprises receiving a ground signal from the at least one conductive contact. The computing device may additionally or alternatively include, wherein determining that at least one conductive contact of the plurality of conductive contacts is contacting a conductive pad comprises detecting a voltage level change at the at least one conductive contact. The computing device may additionally or alternatively include, wherein at least one conductive contact of the plurality of conductive contacts is located adjacent to a first side of the chassis, and at least one other conductive contact of the plurality of conductive contacts is located adjacent to a second side opposite to the first side of the chassis. The computing device may additionally or alternatively include, wherein at least one conductive pad of the plurality of conductive pads is located adjacent to a first side of the circuit board, and at least one other conductive pad of the plurality of conductive pads is located adjacent to a second side opposite to the first side of the circuit board. The computing device may additionally or alternatively include a bypass feature, wherein the instructions are executable to, when the battery is in the powered-off state: determine that none of the conductive contacts are contacting a conductive pad of the plurality of conductive pads; determine that the bypass feature is actuated; and at least on condition of (1) determining that none of the conductive contacts are contacting a conductive pad of the plurality of conductive pads and (2) determining that the bypass feature is actuated, transition the battery to the powered-on state. The computing device may additionally or alternatively include, wherein the computing device is a laptop computing device. The computing device may additionally or alternatively include, wherein the instructions are executable to: when the battery is in the powered-on state: determine that none of the conductive contacts are contacting a conductive pad of the plurality of conductive pads for at least a threshold period of time; and on condition that none of the conductive contacts are contacting a conductive pad of the plurality of conductive pads at least a threshold period of time, either disconnect the battery from providing power to the computing device or transition the battery to a powered-off state.

Another aspect provides a method for determining when a chassis of a computing device is separated from a user interactive surface of the computing device, the chassis being removably securable to the user interactive surface and comprising a plurality of conductive contacts, the computing device further comprising a battery and a circuit board electrically coupled to the battery and comprising a plurality of conductive pads, the method comprising: when the battery is in a powered-on state: determining that none of the conductive contacts are contacting a conductive pad of the plurality of conductive pads of the circuit board; and on condition that none of the conductive contacts are contacting a conductive pad of the plurality of conductive pads, either disconnecting the battery from providing power to the computing device or transitioning the battery to a powered-off state. The method may additionally or alternatively include, when the battery is in the powered-on state: determining that at least one conductive contact of the plurality of conductive contacts is contacting a conductive pad of the plurality of conductive pads; and on condition that the at least one conductive contact is contacting the conductive pad, maintaining the battery in the powered-on state. The method may additionally or alternatively include, when the battery is in the powered-off state: determining that all conductive contacts of the plurality of conductive contacts are contacting a corresponding conductive pad of the plurality of conductive pads; and on condition that all conductive contacts are contacting the corresponding conductive pad, transitioning the battery to the powered-on state. The method may additionally or alternatively include, wherein determining that the at least one conductive contact is contacting the conductive pad comprises receiving a ground signal from the at least one conductive contact. The method may additionally or alternatively include, wherein determining that the at least one conductive contact is contacting the conductive pad comprises detecting a voltage level change at the at least one conductive contact. The method may additionally or alternatively include, wherein at least one conductive contact of the plurality of conductive contacts is located adjacent to a first side of the chassis, and at least one other conductive contact of the plurality of conductive contacts is located adjacent to a second side opposite to the first side of the chassis. The method may additionally or alternatively include, wherein at least one conductive pad of the plurality of conductive pads is located adjacent to a first side of the circuit board, and at least one other conductive pad of the plurality of conductive pads is located adjacent to a second side opposite to the first side of the circuit board. The method may additionally or alternatively include, wherein the computing device further comprises a bypass feature, the method further comprising, when the battery is in the powered-off state: determining that none of the conductive contacts are contacting a conductive pad of the plurality of conductive pads; determining that the bypass feature is actuated; and at least on condition of (1) determining that none of the conductive contacts are contacting a conductive pad of the plurality of conductive pads and (2) determining that the bypass feature is actuated, transitioning the battery to the powered-on state. The method may additionally or alternatively include, when the battery is in the powered-on state: determining that none of the conductive contacts are contacting a conductive pad of the plurality of conductive pads of the circuit board for at least a threshold period of time; and on condition that none of the conductive contacts are contacting a conductive pad of the plurality of conductive pads for at least a threshold period of time, either disconnecting the battery from providing power to the computing device or transitioning the battery to a powered-off state.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A computing device (100), comprising:
a chassis (112) comprising a plurality of conductive contacts (150, 152);
a user interactive surface (114) removably secured to the chassis;
a battery (136);
a circuit board (132) electrically coupled to the battery and comprising a plurality of conductive pads (160, 162); and
a memory (142) storing instructions executable by a processor (138) to detect when the chassis (112) is separated from the user interactive surface (114), wherein each conductive pad of the plurality of conductive pads (160, 162) of the circuit board (132) is operatively configured to contact a corresponding conductive contact of the plurality of conductive contacts (150, 152) of the chassis when the chassis is removably secured to the user interactive surface (114);
wherein the instructions are executable to:
when the battery is in a powered-on state:
determine that none of the conductive contacts (150, 152) are contacting a conductive pad of the plurality of conductive pads (160, 162); and
on condition that none of the conductive contacts (150, 152) are contacting a conductive pad of the plurality of conductive pads (160, 162), either disconnect the battery from providing power to the computing device or transition the battery to a powered-off state.

2. The computing device of claim 1, wherein the instructions are executable to, when the battery (136) is in the powered-on state:
determine that at least one conductive contact of the plurality of conductive contacts (150, 152) is contacting a conductive pad of the plurality of conductive pads (160, 162); and
on condition that the at least one conductive contact is contacting the conductive pad, maintain the battery in the powered-on state.

3. The computing device of claim 1 or 2, wherein the instructions are executable to, when the battery (136) is in the powered-off state:
determine that all conductive contacts of the plurality of conductive contacts (150, 152) are contacting a corresponding conductive pad of the plurality of conductive pads (160, 162); and
on condition that all conductive contacts are contacting the corresponding conductive pad, transition the battery (136) to the powered-on state.

4. The computing device of claim 2, wherein determining that at least one conductive contact of the plurality of conductive contacts (150, 152) is contacting a conductive pad (160, 162) comprises one of the following:
(i) receiving a ground signal from the at least one conductive contact (150, 152);
(ii) detecting a voltage level change at the at least one conductive contact (150, 152).

5. The computing device of any preceding claim, wherein at least one conductive contact of the plurality of conductive contacts (150, 152) is located according to one or more of the following:
(i) wherein at least one conductive contact of the plurality of conductive contacts (150, 152) is located adjacent to a first side of the chassis (112), and at least one other conductive contact of the plurality of conductive contacts (150, 152) is located adjacent to a second side opposite to the first side of the chassis (112);
(ii) wherein at least one conductive pad of the plurality of conductive pads (160, 162) is located adjacent to a first side of the circuit board (132), and at least one other conductive pad of the plurality of conductive pads (160, 162) is located adjacent to a second side opposite to the first side of the circuit board (132).

6. The computing device of any preceding claim, further comprising a bypass feature, wherein the instructions are executable to, when the battery (136) is in the powered-off state:
determine that none of the conductive contacts (150, 152) are contacting a conductive pad of the plurality of conductive pads (160, 162);
determine that the bypass feature is actuated; and
at least on condition of (1) determining that none of the conductive contacts are contacting a conductive pad of the plurality of conductive pads and (2) determining that the bypass feature is actuated, transition the battery to the powered-on state.

7. The computing device of any preceding claim, wherein the computing device (100) is a laptop computing device.

8. The computing device of any preceding claim, wherein the instructions are executable to:
when the battery (136) is in the powered-on state:
determine that none of the conductive contacts (150, 152) are contacting a conductive pad of the plurality of conductive pads for at least a threshold period of time; and
on condition that none of the conductive contacts (150, 152) are contacting a conductive pad of the plurality of conductive pads at least a threshold period of time, either disconnect the battery from providing power to the computing device or transition the battery to a powered-off state.

9. A method for determining when a chassis (112) of a computing device is separated from a user interactive surface (114) of the computing device (100), the chassis (112) being removably securable to the user interactive surface (114) and comprising a plurality of conductive contacts (150, 152), the computing device further comprising a battery (136) and a circuit board (132) electrically coupled to the battery and comprising a plurality of conductive pads, the method comprising:
when the battery (136) is in a powered-on state:
determining that none of the conductive contacts (150, 152) are contacting a conductive pad of the plurality of conductive pads (160, 162) of the circuit board (132); and
on condition that none of the conductive contacts (150, 152) are contacting a conductive pad of the plurality of conductive pads (160, 162), either disconnecting the battery (136) from providing power to the computing device or transitioning the battery (136) to a powered- off state.

10. The method of claim 9, further comprising, when the battery (136) is in the powered-on state:
determining that at least one conductive contact of the plurality of conductive contacts (150, 152) is contacting a conductive pad of the plurality of conductive pads (160, 162); and
on condition that the at least one conductive contact is contacting the conductive pad, maintaining the battery (136) in the powered-on state.

11. The method of claim 9 or 10, further comprising, when the battery (136) is in the powered-off state:
determining that all conductive contacts of the plurality of conductive contacts (150, 152) are contacting a corresponding conductive pad of the plurality of conductive pads (160, 162); and
on condition that all conductive contacts are contacting the corresponding conductive pad, transitioning the battery (136) to the powered-on state.

12. The method of claim 10, wherein determining that the at least one conductive contact is contacting the conductive pad is provided according to one of the following:
(i) wherein determining that the at least one conductive contact is contacting the conductive pad comprises receiving a ground signal from the at least one conductive contact;
(ii) wherein determining that the at least one conductive contact is contacting the conductive pad comprises detecting a voltage level change at the at least one conductive contact.

13. The method of any one of claims 9-12, wherein at least one conductive contact of the plurality of conductive contacts (150, 152) is located according to one or more of the following:
(i) wherein at least one conductive contact of the plurality of conductive contacts (150, 152) is located adjacent to a first side of the chassis (112), and at least one other conductive contact of the plurality of conductive contacts (150, 152) is located adjacent to a second side opposite to the first side of the chassis (112);
(ii) wherein at least one conductive pad of the plurality of conductive pads (160, 162) is located adjacent to a first side of the circuit board (132), and at least one other conductive pad of the plurality of conductive pads (160, 162) is located adjacent to a second side opposite to the first side of the circuit board (132).

14. The method of any one of claims 9-13, wherein the computing device (100) further comprises a bypass feature (170), the method further comprising, when the battery (136) is in the powered-off state:
determining that none of the conductive contacts are contacting a conductive pad of the plurality of conductive pads (160, 162);
determining that the bypass feature (170) is actuated; and
at least on condition of (1) determining that none of the conductive contacts (150, 152) are contacting a conductive pad of the plurality of conductive pads (160, 162) and (2) determining that the bypass feature (170) is actuated, transitioning the battery (136) to the powered-on state.

15. The method of any one of claims 9-14, the method further comprising, when the battery is in the powered-on state:
determining that none of the conductive contacts (150, 152) are contacting a conductive pad of the plurality of conductive pads (160, 162) of the circuit board (132) for at least a threshold period of time; and
on condition that none of the conductive contacts are contacting a conductive pad of the plurality of conductive pads (160, 162) for at least a threshold period of time, either disconnecting the battery (136) from providing power to the computing device or transitioning the battery (136) to a powered-off state.

## Patentansprüche

1. Eine Rechenvorrichtung (100), beinhaltend:
ein Gehäuse (112), das eine Vielzahl von leitfähigen Kontakten (150, 152) beinhaltet;
eine benutzerinteraktive Oberfläche (114), die entfernbar an dem Gehäuse gesichert ist;
eine Batterie (136);
eine Leiterplatte (132), die mit der Batterie elektrisch gekoppelt ist und eine Vielzahl von leitfähigen Pads (160, 162) beinhaltet; und
einen Speicher (142), der Anweisungen speichert, die durch einen Prozessor (138) ausführbar sind, um zu erkennen, wann das Gehäuse (112) von der benutzerinteraktiven Oberfläche (114) getrennt ist, wobei jedes leitfähige Pad der Vielzahl von leitfähigen Pads (160, 162) der Leiterplatte (132) betrieblich konfiguriert ist, um mit einem entsprechenden leitfähigen Kontakt der Vielzahl von leitfähigen Kontakten (150, 152) des Gehäuses in Kontakt zu sein, wenn das Gehäuse entfernbar an der benutzerinteraktiven Oberfläche (114) gesichert ist;
wobei die Anweisungen für Folgendes ausführbar sind:
wenn sich die Batterie in einem eingeschalteten Zustand befindet:
Bestimmen, dass keiner der leitfähigen Kontakte (150, 152) mit einem leitfähigen Pad der Vielzahl von leitfähigen Pads (160, 162) in Kontakt ist; und
unter der Bedingung, dass keiner der leitfähigen Kontakte (150, 152) mit einem leitfähigen Pad der Vielzahl von leitfähigen Pads (160, 162) in Kontakt ist, entweder Abtrennen der Batterie, sodass diese der Rechenvorrichtung keine Leistung mehr bereitstellt, oder Umschalten der Batterie in einen ausgeschalteten Zustand.

2. Rechenvorrichtung gemäß Anspruch 1, wobei, wenn sich die Batterie (136) in dem eingeschalteten Zustand befindet, die Anweisungen für Folgendes ausführbar sind:
Bestimmen, dass mindestens ein leitfähiger Kontakt der Vielzahl von leitfähigen Kontakten (150, 152) mit einem leitfähigen Pad der Vielzahl von leitfähigen Pads (160, 162) in Kontakt ist; und
unter der Bedingung, dass der mindestens eine leitfähige Kontakt mit dem leitfähigen Pad in Kontakt ist, Halten der Batterie in dem eingeschalteten Zustand.

3. Rechenvorrichtung gemäß Anspruch 1 oder 2, wobei, wenn sich die Batterie (136) in dem ausgeschalteten Zustand befindet, die Anweisungen für Folgendes ausführbar sind:
Bestimmen, dass alle leitfähigen Kontakte der Vielzahl von leitfähigen Kontakten (150, 152) mit einem entsprechenden leitfähigen Pad der Vielzahl von leitfähigen Pads (160, 162) in Kontakt sind; und
unter der Bedingung, dass alle leitfähigen Kontakte mit dem entsprechenden leitfähigen Pad in Kontakt sind, Umschalten der Batterie (136) in den eingeschalteten Zustand.

4. Rechenvorrichtung gemäß Anspruch 2, wobei das Bestimmen, dass mindestens ein leitfähiger Kontakt der Vielzahl von leitfähigen Kontakten (150, 152) mit einem leitfähigen Pad (160, 162) in Kontakt ist, eines von Folgendem beinhaltet:
(i) Empfangen eines Massesignals von dem mindestens einen leitfähigen Kontakt (150, 152);
(ii) Erkennen einer Spannungspegeländerung an dem mindestens einen leitfähigen Kontakt (150, 152).

5. Rechenvorrichtung gemäß einem der vorhergehenden Ansprüche, wobei mindestens ein leitfähiger Kontakt der Vielzahl von leitfähigen Kontakten (150, 152) gemäß einem oder mehreren von Folgendem angeordnet ist:
(i) wobei mindestens ein leitfähiger Kontakt der Vielzahl von leitfähigen Kontakten (150, 152) angrenzend an eine erste Seite des Gehäuses (112) angeordnet ist und mindestens ein anderer leitfähiger Kontakt der Vielzahl von leitfähigen Kontakten (150, 152) angrenzend an eine zweite Seite, die zu der ersten Seite des Gehäuses (112) entgegengesetzt ist, angeordnet ist;
(ii) wobei mindestens ein leitfähiges Pad der Vielzahl von leitfähigen Pads (160, 162) angrenzend an eine erste Seite der Leiterplatte (132) angeordnet ist und mindestens ein anderes leitfähiges Pad der Vielzahl von leitfähigen Pads (160, 162) angrenzend an eine zweite Seite, die zu der ersten Seite der Leiterplatte (132) entgegengesetzt ist, angeordnet ist.

6. Rechenvorrichtung gemäß einem der vorhergehenden Ansprüche, ferner beinhaltend ein Umgehungsmerkmal, wobei, wenn sich die Batterie (136) in dem ausgeschalteten Zustand befindet, die Anweisungen für Folgendes ausführbar sind:
Bestimmen, dass keiner der leitfähigen Kontakte (150, 152) mit einem leitfähigen Pad der Vielzahl von leitfähigen Pads (160, 162) in Kontakt ist;
Bestimmen, dass das Umgehungsmerkmal aktiviert ist; und
mindestens unter der Bedingung (1) des Bestimmens, dass keiner der leitfähigen Kontakte mit einem leitfähigen Pad der Vielzahl von leitfähigen Pads in Kontakt ist, und (2) des Bestimmens, dass das Umgehungsmerkmal aktiviert ist, Umschalten der Batterie in den eingeschalteten Zustand.

7. Rechenvorrichtung gemäß einem der vorhergehenden Ansprüche, wobei die Rechenvorrichtung (100) eine Laptop-Rechenvorrichtung ist.

8. Rechenvorrichtung gemäß einem der vorhergehenden Ansprüche, wobei die Anweisungen für Folgendes ausführbar sind:
wenn sich die Batterie (136) in dem eingeschalteten Zustand befindet:
Bestimmen, dass keiner der leitfähigen Kontakte (150, 152) für mindestens einen Schwellenzeitraum mit einem leitfähigen Pad der Vielzahl von leitfähigen Pads in Kontakt war; und
unter der Bedingung, dass keiner der leitfähigen Kontakte (150, 152) für mindestens einen Schwellenzeitraum mit einem leitfähigen Pad der Vielzahl von leitfähigen Pads in Kontakt war, entweder Abtrennen der Batterie, sodass diese der Rechenvorrichtung keine Leistung mehr bereitstellt, oder Umschalten der Batterie in einen ausgeschalteten Zustand.

9. Ein Verfahren zum Bestimmen, wann ein Gehäuse (112) einer Rechenvorrichtung von einer benutzerinteraktiven Oberfläche (114) der Rechenvorrichtung (100) getrennt ist, wobei das Gehäuse (112) entfernbar an der benutzerinteraktiven Oberfläche (114) gesichert werden kann und eine Vielzahl von leitfähigen Kontakten (150, 152) beinhaltet, wobei die Rechenvorrichtung ferner eine Batterie (136) und eine Leiterplatte (132), die mit der Batterie elektrisch gekoppelt ist und eine Vielzahl von leitfähigen Pads beinhaltet, beinhaltet, wobei das Verfahren Folgendes beinhaltet:
wenn sich die Batterie (136) in einem eingeschalteten Zustand befindet:
Bestimmen, dass keiner der leitfähigen Kontakte (150, 152) mit einem leitfähigen Pad der Vielzahl von leitfähigen Pads (160, 162) der Leiterplatte (132) in Kontakt ist; und
unter der Bedingung, dass keiner der leitfähigen Kontakte (150, 152) mit einem leitfähigen Pad der Vielzahl von leitfähigen Pads (160, 162) in Kontakt ist, entweder Abtrennen der Batterie (136), sodass diese der Rechenvorrichtung keine Leistung mehr bereitstellt, oder Umschalten der Batterie (136) in einen ausgeschalteten Zustand.

10. Verfahren gemäß Anspruch 9, ferner beinhaltend, wenn sich die Batterie (136) in dem eingeschalteten Zustand befindet:
Bestimmen, dass mindestens ein leitfähiger Kontakt der Vielzahl von leitfähigen Kontakten (150, 152) mit einem leitfähigen Pad der Vielzahl von leitfähigen Pads (160, 162) in Kontakt ist; und
unter der Bedingung, dass der mindestens eine leitfähige Kontakt mit dem leitfähigen Pad in Kontakt ist, Halten der Batterie (136) in dem eingeschalteten Zustand.

11. Verfahren gemäß Anspruch 9 oder 10, ferner beinhaltend, wenn sich die Batterie (136) in dem ausgeschalteten Zustand befindet:
Bestimmen, dass alle leitfähigen Kontakte der Vielzahl von leitfähigen Kontakten (150, 152) mit einem entsprechenden leitfähigen Pad der Vielzahl von leitfähigen Pads (160, 162) in Kontakt sind; und
unter der Bedingung, dass alle leitfähigen Kontakte mit dem entsprechenden leitfähigen Pad in Kontakt sind, Umschalten der Batterie (136) in den eingeschalteten Zustand.

12. Verfahren gemäß Anspruch 10, wobei das Bestimmen, dass der mindestens eine leitfähige Kontakt mit dem leitfähigen Pad in Kontakt ist, gemäß einem von Folgendem bereitgestellt wird:
(i) wobei das Bestimmen, dass der mindestens eine leitfähige Kontakt mit dem leitfähigen Pad in Kontakt ist, das Empfangen eines Massesignals von dem mindestens einen leitfähigen Kontakt beinhaltet;
(ii) wobei das Bestimmen, dass der mindestens eine leitfähige Kontakt mit dem leitfähigen Pad in Kontakt ist, das Erkennen einer Spannungspegeländerung an dem mindestens einen leitfähigen Kontakt beinhaltet.

13. Verfahren gemäß einem der Ansprüche 9-12, wobei mindestens ein leitfähiger Kontakt der Vielzahl von leitfähigen Kontakten (150, 152) gemäß einem oder mehreren von Folgendem angeordnet ist:
(i) wobei mindestens ein leitfähiger Kontakt der Vielzahl von leitfähigen Kontakten (150, 152) angrenzend an eine erste Seite des Gehäuses (112) angeordnet ist und mindestens ein anderer leitfähiger Kontakt der Vielzahl von leitfähigen Kontakten (150, 152) angrenzend an eine zweite Seite, die zu der ersten Seite des Gehäuses (112) entgegengesetzt ist, angeordnet ist;
(ii) wobei mindestens ein leitfähiges Pad der Vielzahl von leitfähigen Pads (160, 162) angrenzend an eine erste Seite der Leiterplatte (132) angeordnet ist und mindestens ein anderes leitfähiges Pad der Vielzahl von leitfähigen Pads (160, 162) angrenzend an eine zweite Seite, die zu der ersten Seite der Leiterplatte (132) entgegengesetzt ist, angeordnet ist.

14. Verfahren gemäß einem der Ansprüche 9-13, wobei die Rechenvorrichtung (100) ferner ein Umgehungsmerkmal (170) beinhaltet, wobei, wenn sich die Batterie (136) in dem ausgeschalteten Zustand befindet, das Verfahren ferner Folgendes beinhaltet: Bestimmen, dass keiner der leitfähigen Kontakte mit einem leitfähigen Pad der Vielzahl von leitfähigen Pads (160, 162) in Kontakt ist;
Bestimmen, dass das Umgehungsmerkmal (170) aktiviert ist; und
mindestens unter der Bedingung (1) des Bestimmens, dass keiner der leitfähigen Kontakte (150, 152) mit einem leitfähigen Pad der Vielzahl von leitfähigen Pads (160, 162) in Kontakt ist, und (2) des Bestimmens, dass das Umgehungsmerkmal (170) aktiviert ist, Umschalten der Batterie (136) in den eingeschalteten Zustand.

15. Verfahren gemäß einem der Ansprüche 9-14, wobei, wenn sich die Batterie in dem eingeschalteten Zustand befindet, das Verfahren ferner Folgendes beinhaltet:
Bestimmen, dass keiner der leitfähigen Kontakte (150, 152) für mindestens einen Schwellenzeitraum mit einem leitfähigen Pad der Vielzahl von leitfähigen Pads (160, 162) der Leiterplatte (132) in Kontakt war; und
unter der Bedingung, dass keiner der leitfähigen Kontakte für mindestens einen Schwellenzeitraum mit einem leitfähigen Pad der Vielzahl von leitfähigen Pads (160, 162) in Kontakt war, entweder Abtrennen der Batterie (136), sodass diese der Rechenvorrichtung keine Leistung mehr bereitstellt, oder Umschalten der Batterie (136) in einen ausgeschalteten Zustand.

## Revendications

1. Un dispositif informatique (100), comprenant :
un châssis (112) comprenant une pluralité de contacts conducteurs (150, 152) ;
une surface d'interaction utilisateur (114) fixée de manière amovible au châssis ;
une batterie (136) ;
une carte de circuit imprimé (132) couplée électriquement à la batterie et comprenant une pluralité de pastilles conductrices (160, 162) ; et
une mémoire (142) stockant des instructions exécutables par un processeur (138) pour détecter quand le châssis (112) est séparé de la surface d'interaction utilisateur (114), dans lequel chaque pastille conductrice de la pluralité de pastilles conductrices (160, 162) de la carte de circuit imprimé (132) est configurée fonctionnellement pour entrer en contact avec un contact conducteur correspondant de la pluralité de contacts conducteurs (150, 152) du châssis lorsque le châssis est fixé de manière amovible à la surface d'interaction utilisateur (114) ;
dans lequel les instructions sont exécutables pour :
lorsque la batterie est dans un état sous tension :
déterminer qu'aucun des contacts conducteurs (150, 152) n'est en contact avec une pastille conductrice de la pluralité de pastilles conductrices (160, 162) ; et
à condition qu'aucun des contacts conducteurs (150, 152) ne soit en contact avec une pastille conductrice de la pluralité de pastilles conductrices (160, 162), soit déconnecter la batterie pour qu'elle n'alimente pas le dispositif informatique, soit faire passer la batterie à un état hors tension.

2. Le dispositif informatique de la revendication 1, dans lequel les instructions sont exécutables pour, lorsque la batterie (136) est dans l'état sous tension :
déterminer qu'au moins un contact conducteur de la pluralité de contacts conducteurs (150, 152) est en contact avec une pastille conductrice de la pluralité de pastilles conductrices (160, 162) ; et
à condition que l'au moins un contact conducteur soit en contact avec la pastille conductrice, maintenir la batterie dans l'état sous tension.

3. Le dispositif informatique de la revendication 1 ou de la revendication 2, dans lequel les instructions sont exécutables pour, lorsque la batterie (136) est dans l'état hors tension :
déterminer que tous les contacts conducteurs de la pluralité de contacts conducteurs (150, 152) sont en contact avec une pastille conductrice correspondante de la pluralité de pastilles conductrices (160, 162) ; et
à condition que tous les contacts conducteurs soient en contact avec la pastille conductrice correspondante, faire passer la batterie (136) à l'état sous tension.

4. Le dispositif informatique de la revendication 2, dans lequel la détermination du fait qu'au moins un contact conducteur de la pluralité de contacts conducteurs (150, 152) est en contact avec une pastille conductrice (160, 162) comprend l'une des opérations suivantes :
(i) la réception d'un signal de masse provenant de l'au moins un contact conducteur (150, 152) ;
(ii) la détection d'un changement de niveau de tension au niveau de l'au moins un contact conducteur (150, 152).

5. Le dispositif informatique de n'importe quelle revendication précédente, dans lequel au moins un contact conducteur de la pluralité de contacts conducteurs (150, 152) est situé conformément à un ou plusieurs des cas de figure suivants :
(i) dans lequel au moins un contact conducteur de la pluralité de contacts conducteurs (150, 152) est situé adjacent à un premier côté du châssis (112), et au moins un autre contact conducteur de la pluralité de contacts conducteurs (150, 152) est situé adjacent à un deuxième côté opposé au premier côté du châssis (112) ;
(ii) dans lequel au moins une pastille conductrice de la pluralité de pastilles conductrices (160, 162) est située adjacente à un premier côté de la carte de circuit imprimé (132), et au moins une autre pastille conductrice de la pluralité de pastilles conductrices (160, 162) est située adjacente à un deuxième côté opposé au premier côté de la carte de circuit imprimé (132).

6. Le dispositif informatique de n'importe quelle revendication précédente, comprenant en outre une fonction de contournement, dans lequel les instructions sont exécutables pour, lorsque la batterie (136) est dans l'état hors tension :
déterminer qu'aucun des contacts conducteurs (150, 152) n'est en contact avec une pastille conductrice de la pluralité de pastilles conductrices (160, 162) ;
déterminer que la fonction de contournement est actionnée ; et
au moins à condition de (1) déterminer qu'aucun des contacts conducteurs n'est en contact avec une pastille conductrice de la pluralité de pastilles conductrices et de (2) déterminer que la fonction de contournement est actionnée, faire passer la batterie à l'état sous tension.

7. Le dispositif informatique de n'importe quelle revendication précédente, le dispositif informatique (100) étant un dispositif informatique portatif.

8. Le dispositif informatique de n'importe quelle revendication précédente, dans lequel les instructions sont exécutables pour :
lorsque la batterie (136) est dans l'état sous tension :
déterminer qu'aucun des contacts conducteurs (150, 152) n'est en contact avec une pastille conductrice de la pluralité de pastilles conductrices pendant au moins un laps de temps seuil ; et
à condition qu'aucun des contacts conducteurs (150, 152) ne soit en contact avec une pastille conductrice de la pluralité de pastilles conductrices pendant au moins un laps de temps seuil, soit déconnecter la batterie pour qu'elle n'alimente pas le dispositif informatique, soit faire passer la batterie à un état hors tension.

9. Un procédé pour la détermination de quand un châssis (112) d'un dispositif informatique est séparé d'une surface d'interaction utilisateur (114) du dispositif informatique (100), le châssis (112) étant fixable de manière amovible à la surface d'interaction utilisateur (114) et comprenant une pluralité de contacts conducteurs (150, 152), le dispositif informatique comprenant en outre une batterie (136) et une carte de circuit imprimé (132) couplée électriquement à la batterie et comprenant une pluralité de pastilles conductrices, le procédé comprenant :
lorsque la batterie (136) est dans un état sous tension :
la détermination du fait qu'aucun des contacts conducteurs (150, 152) n'est en contact avec une pastille conductrice de la pluralité de pastilles conductrices (160, 162) de la carte de circuit imprimé (132) ; et
à condition qu'aucun des contacts conducteurs (150, 152) ne soit en contact avec une pastille conductrice de la pluralité de pastilles conductrices (160, 162), soit la déconnexion de la batterie (136) pour qu'elle n'alimente pas le dispositif informatique, soit le passage de la batterie (136) à un état hors tension.

10. Le procédé de la revendication 9, comprenant en outre, lorsque la batterie (136) est dans l'état sous tension :
la détermination du fait qu'au moins un contact conducteur de la pluralité de contacts conducteurs (150, 152) est en contact avec une pastille conductrice de la pluralité de pastilles conductrices (160, 162) ; et
à condition que l'au moins un contact conducteur soit en contact avec la pastille conductrice, le maintien de la batterie (136) dans l'état sous tension.

11. Le procédé de la revendication 9 ou de la revendication 10, comprenant en outre, lorsque la batterie (136) est dans l'état hors tension :
la détermination du fait que tous les contacts conducteurs de la pluralité de contacts conducteurs (150, 152) sont en contact avec une pastille conductrice correspondante de la pluralité de pastilles conductrices (160, 162) ; et
à condition que tous les contacts conducteurs soient en contact avec la pastille conductrice correspondante, le passage de la batterie (136) à l'état sous tension.

12. Le procédé de la revendication 10, dans lequel la détermination du fait que l'au moins un contact conducteur est en contact avec la pastille conductrice est assurée conformément à l'un des cas de figure suivants :
(i) dans lequel la détermination du fait que l'au moins un contact conducteur est en contact avec la pastille conductrice comprend la réception d'un signal de masse provenant de l'au moins un contact conducteur ;
(ii) dans lequel la détermination du fait que l'au moins un contact conducteur est en contact avec la pastille conductrice comprend la détection d'un changement de niveau de tension au niveau de l'au moins un contact conducteur.

13. Le procédé de l'une quelconque des revendications 9 à 12, dans lequel au moins un contact conducteur de la pluralité de contacts conducteurs (150, 152) est situé conformément à un ou plusieurs des cas de figure suivants :
(i) dans lequel au moins un contact conducteur de la pluralité de contacts conducteurs (150, 152) est situé adjacent à un premier côté du châssis (112), et au moins un autre contact conducteur de la pluralité de contacts conducteurs (150, 152) est situé adjacent à un deuxième côté opposé au premier côté du châssis (112) ;
(ii) dans lequel au moins une pastille conductrice de la pluralité de pastilles conductrices (160, 162) est située adjacente à un premier côté de la carte de circuit imprimé (132), et au moins une autre pastille conductrice de la pluralité de pastilles conductrices (160, 162) est située adjacente à un deuxième côté opposé au premier côté de la carte de circuit imprimé (132).

14. Le procédé de l'une quelconque des revendications 9 à 13, dans lequel le dispositif informatique (100) comprend en outre une fonction de contournement (170), le procédé comprenant en outre, lorsque la batterie (136) est dans l'état hors tension :
la détermination du fait qu'aucun des contacts conducteurs n'est en contact avec une pastille conductrice de la pluralité de pastilles conductrices (160, 162) ;
la détermination du fait que la fonction de contournement (170) est actionnée ; et
au moins à condition de (1) déterminer qu'aucun des contacts conducteurs (150, 152) n'est en contact avec une pastille conductrice de la pluralité de pastilles conductrices (160, 162) et de (2) déterminer que la fonction de contournement (170) est actionnée, le passage de la batterie (136) à l'état sous tension.

15. Le procédé de l'une quelconque des revendications 9 à 14, le procédé comprenant en outre, lorsque la batterie est dans l'état sous tension :
la détermination du fait qu'aucun des contacts conducteurs (150, 152) n'est en contact avec une pastille conductrice de la pluralité de pastilles conductrices (160, 162) de la carte de circuit imprimé (132) pendant au moins un laps de temps seuil ; et
à condition qu'aucun des contacts conducteurs ne soit en contact avec une pastille conductrice de la pluralité de pastilles conductrices (160, 162) pendant au moins un laps de temps seuil, soit la déconnexion de la batterie (136) pour qu'elle n'alimente pas le dispositif informatique, soit le passage de la batterie (136) à un état hors tension.
